# EUROPEAN PATENT SPECIFICATION

(11) **EP 0 707 153 B1**
(45) Date of publication and mention of the grant of the patent: **13.06.2001**
(21) Application number: 95202741.5
(22) Date of filing: 11.10.1995
(51) Int. Cl.: F16B 11/00, E06B 3/56, E06B 3/02

(54) **Glass panel attachment**
Befestigung von Glasscheiben
Fixation de vitres

(30) Priority: 11.10.1994 NL 9401673
(43) Date of publication of application: 17.04.1996
(73) Proprietor: OCTATUBE SPACE STRUCTURES B.V., 2628 AS Delft (NL)
(72) Inventor: Eekhout, Adrianus Cornelis Jozef, NL-2628 AS Delft (NL)
(74) Representative: De Hoop, Eric

(56) References cited:
- EP-A- 0 115 692
- EP-A- 0 219 217
- DE-A- 3 806 254
- FR-A- 2 099 365
- FR-A- 2 632 348
- GB-A- 1 096 812
- NL-A- 7 405 500
- US-A- 5 277 530
- PATENT ABSTRACTS OF JAPAN vol. 8 no. 207 (M-327) [1644] ,21 September 1984 & JP-A-59 096028 (NISSAN JIDOSCHA) 2 June 1984,
- BOUWWERELD, vol. 72, no. 10, 14 May 1976 DOETINCHEM, NL, pages 62-63, 'KLEP- EN DRAAIRAMEN ZONDER RANDVERSTIJVING'

## Description

The present invention relates to an apparatus for constructionally connecting a glass panel to a supporting structure according to the preamble of claim 1.

Building fronts, windows, doors and frames in the building industry traditionally consist of a wooden, metal or plastic window-frame with a, transparent or otherwise, pane of a glass or plastic placed therein. In architectural circles, however, the need has arisen for glazing without frames, wherein the glass surfaces are formed by separate glass plates which have been built up without the aid of frames. In order to form walls and roofs large glass surfaces are often used, larger than the dimension of one glass plate, in which the glass plates should be mutually coupled. Usually this is done by a bolt connection near a corner of the glass plate, in which the bolt connects the corner of the glass plate to a metal coupling piece, via which coupling piece two, four or even more glass plates are then coupled. In order to be spatially stable, these coupling pieces require an external supporting structure, such as a column, a front post, a beam, a lattice girder or a structure of cables or tension wires and strut trusses. The glass surface then consists of several flat glass plates, provided at their corners or near their long sides with holes through which the bolts are passed.

A drawback to this bolt connecting method is that holes must be drilled in the glass panel, which can for instance cause cracking or breaking. Moreover, the bolt, if it is made of steel, may not directly come into mechanical contact with the glass, since this will cause the glass to crack or break under the occurring high local peak stresses, and the bolt connection should be sealed at the location of the glass plate in order to keep the relevant glass surface of the building wind- and watertight. To this end, additional provisions are necessary, such as for instance a sealing ring of a tough material such as a deformable metal or a synthetic material or rubber.

When double glass panels are used, perforating the panels causes even more drawbacks. Such panels are supplied pre-fabricated with a conditioned cavity which is screened gastight and watertight from the outside world by means of a reliable sealing provided along the perimeter of the glass plates. A significant drawback to the present-day attaching method of drilling through such a double glass panel is that measures should also be taken to again achieve this high-grade seal. For this purpose, sealing rings should be provided in the bore holes and in the cavity. However, this does not remove the risk of leakage of gas and water into the cavity.

A connecting apparatus according to the preamble of claim 1 is known from German patent specification DE-A-38 06 254. Herein an apparatus is described comprising a groove in which a lamina is positioned which comprises the glue surface to be attached to a glass panel. This lamina can have a circular form. The groove is oversized so that there remains a circular gap between the periphery of the lamina and the edge of the supporting apparatus.

This allows the glass panel, without a hole needing to be present or to be made in this, to be mounted to a supporting structure, so that fitting additional seals at the location of the attachments is no longer necessary and, in the case of a double glass panel, the conditioned cavity is not penetrated, and the risk of leakage is not increased.

Furthermore, it is preferred that the connecting means comprises a bore hole with an internal screw thread. A bolt or threaded end can be applied in this for connection of the glued glass panel to a metal coupling piece, as is usual. A detachable connection of a different type can of course also be used.

A drawback to the known apparatus, however, is that the gluings onto glass obtained thereby do not have a reproducible shape. This results in ugly, irregular glue connections which will be visible through the glass panel. Furthermore, during gluing, superfluous glue will be uncontrollably pressed out from between the apparatus and the glass panel, which spilled glue must be removed thereafter.

It is the object of the invention to obviate the drawbacks to the state of the art, in that said base having integrally therewith at its bottom a glue surface for gluing together with the glass panel, said glue surface being integrally provided with a groove running along its periphery, the contour edge of the groove situated on the outside of the groove being retracted with respect to the glue surface, so that during gluing it remains at a greater distance from the glass panel than the glue surface, said base flaring outwards in the shape of a trumpet from the connecting means to the glue surface. The base flares out being thin towards the edge of the glue surface, the thickness of the base near the glue surface edge preferably being less than 1 mm. During application of the connecting apparatus on the glass, superfluous glue can flow into the groove. When the connecting apparatus is rotatingly applied on the glass panel, the groove can be made to fill up with glue up to its outer groove wall, as a consequence of which a circular gluing with a reproducible diameter is obtained. The contour edge of the groove situated on the outside of the groove is retracted, so that during gluing it remains at a greater distance from the glass panel than the glue surface. This prevents the connecting apparatus from coming into direct contact with the glass panel, which, if the connecting apparatus is made of a tougher and less resilient material than glass, such as for instance stainless steel, can lead to the glass cracking or breaking.

It is known per se from US-A-5 277 530 that a glue surface is rotationally symmetrical with a circular contour and is provided with a groove running along its periphery.

A flat glue surface will be sufficient for most applications (flat glass panels). Owing to the fact that the base has the shape of a trumpet, the forces occurring on the portion of the edge concerned are distributed over a larger portion of the glue surface, as a consequence of which the glue connection can better resist peeling by a bending moment.

The invention further relates to a method for attaching a connecting apparatus to a glass panel, said apparatus for constructionally connecting the glass panel to a supporting structure, said apparatus being provided with a glue surface for gluing together with the glass panel, and provided with a connecting means for attaching the apparatus to the supporting structure, the glue surface being rotationally symmetrical with a circular contour, said glue surface being provided with a groove running along its periphery, wherein the connecting apparatus is glued together with the glass panel, wherein an amount of glue is applied on the glue surface of the connecting apparatus and/or on the attachment surface of the glass panel, and wherein subsequently the connecting apparatus is applied with its base to the attachment surface of the glass panel, characterized in that the connecting apparatus is rotatingly applied with its base to the attachment surface of the glass panel. Thus a connecting apparatus can advantageously be attached on a glass panel by applying an exact amount of glue on to the glue surface thereof and/or on to the attachment surface of the glass panel, and by subsequently rotatingly applying the connecting apparatus with its base to the attachment surface of the glass panel. The distribution of the glue during gluing can advantageously be observed by means of a mirror placed behind the glass panel. In this way, a reproducible, almost circular glue front can be obtained, which, for instance when the glue surfaces are visible in a glass front, is highly desirable in order to obtain an architecturally uniform and severe aspect.

Preferably, the contour edge of the groove situated on the outside of the groove is retracted, so that during gluing it remains at a greater distance from the glass panel than the glue surface. This prevents the connecting apparatus from coming into direct contact with the glass panel, which, if the connecting apparatus is made of a tougher and less resilient material than glass, such as for instance stainless steel, can lead to the glass cracking or breaking.

Furthermore, it is preferred that the connecting means comprises a bore hole with an internal screw thread. A bolt or threaded end can be applied in this for connection of the glued glass panel to a metal coupling piece, as is usual. A detachable connection of a different type can of course also be used.

The connecting apparatus can be made from one piece of a metal or a metal alloy or a synthetic material, and is preferably made of stainless steel or aluminium. In view of its great resilient deformability, aluminium is preferred in applications in which bending moment loading of the glue connection occurs, in order to prevent peeling of the glue connection.

A suitable glue for this application is an epoxy-based glue. Such a glue produces a very rigid glue connection which cannot easily be peeled off. A different type of glue, which is compatible with glass and the material of the connecting means, and which forms a rigid glue connection, can of course be used as well. In order to obtain a strong and rigid glue connection, the thickness of the glue layer is preferably less than 1mm. It has been found that such a glue connection is suitable for the attachment of glass panels in horizontal, gabled and sloping roofs, as well as in vertical walls, and can be loaded with the tensile, pressure and shearing forces occurring therein and offers sufficient resistance to creep in lengthy loads.

In a glass front in which the supporting structure is located on the inside of the building, the glue layer will be exposed to, direct or indirect, sunlight. For that reason, preferably a glue is used which is resistant to ultraviolet light.

The glue surface of the connecting apparatus is preferably textured or roughened, for instance by a lathe operation, and the attachment surface of the glass panel is preferably roughened prior to the gluing, for instance by sand blasting or etching. This increases the application surfaces or the binding surfaces for the glue, and results in a glue connection which is more resistant to shearing forces.

The invention will be further explained on the basis of several exemplary embodiments, with reference to the drawings, in which:
figure 1 shows a perspective view of an embodiment of a connecting apparatus according to the invention,
figure 2A shows a partially cut-open side view of the connecting apparatus of figure 1,
figure 2B shows a bottom view of the connecting apparatus of figure 2A,
figure 3A shows a partially cut-open side view of a third embodiment of a connecting apparatus according to the invention, and
figure 3B shows a bottom view of the connecting apparatus of figure 3A.

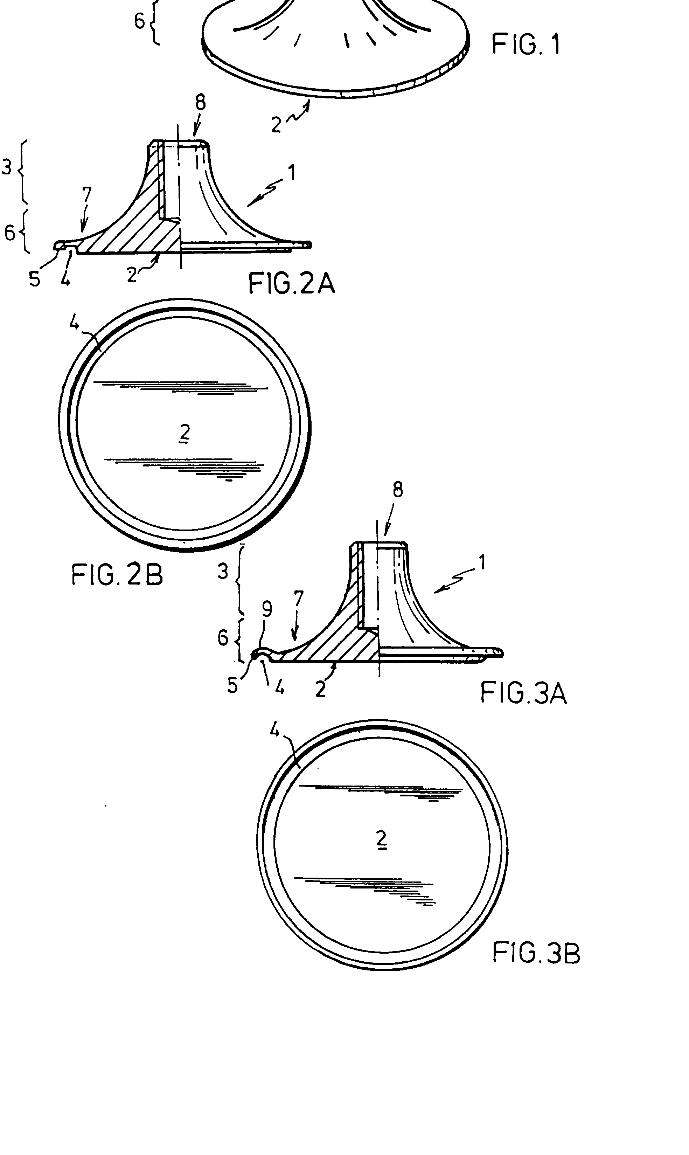

In the figures, similar parts have been indicated by similar reference numerals. The perspective view of figure 1 presents a general impression of a connecting apparatus 1 according to the invention, comprising as main components a base 6 and a connecting means 3. The base 6 has at its bottom side a glue surface 2 and the connecting means 3 comprises a bore hole 8 with an internal screw thread which can be connected, by means of a bolt or threaded end, to a coupling piece in order to hang on to it a glass panel glued together with the glue surface 2.

The force to be transmitted by the connecting apparatus 1 is distributed over a large glue surface 2, so that the glue connection is not overloaded, and is concentrated in the connecting means 3. The connecting means 3 merges towards the glue surface 2 into the base 6, which has the flaring shape of a trumpet. The severe trumpet shape is highly suitable for use in modern architecture.

When the connecting apparatus 1 is glued together with a glass panel, a glue connection is created which is well resistant to tensile, pushing and shearing loads. A glue connection, however, is in general not really resistant to peeling loads. When the glue connection is loaded with a bending moment, a peeling force is concentrated on one side of the glue surface 2, on the edge thereof.

In figure 2A it is visible that the trumpet base 6 flares out being thin towards the edge of the glue surface 2. The thin trumpet base edge 7 has a deforming function. The trumpet edge has been thinned down such, that it is more resilient than the rigid glue connection in a direction perpendicular to the glue surface 2. That is why the trumpet edge 7 deforms when the glue connection is loaded with a bending moment. The trumpet edge 7 shifts relative to the connecting means 3 and remains in place relative to the glass panel.

Figure 2A (and figure 2B) further show that the glue surface 2 is provided with a groove 4 running along its periphery for receiving superfluous glue. During gluing, the connecting means 1 is rotatingly pressed on the blob of glue on the attachment surface of the glass panel. By means of a mirror placed behind the glass panel, the distribution of the blob of glue can be observed. The rotation results in a reproducible, circular glue front, of which the overflow into the groove 4 can be observed in the mirror. The rotating and pressing of the connecting apparatus 1 is stopped at the moment at which the glue front reaches the outer wall of the groove 4. Thus, a circular gluing is created with a pre-determined diameter which is equal to the diameter of the circular outer wall of the groove 4. This gluing will become visible on the opposite side of the glass panel, and is surrounded by the outer contour edge 5 of the groove 4. This contour edge 5 of the groove 4 is retracted relative to the glue surface 2, to ensure that the connecting apparatus does not come into direct contact with the glass panel.

The connecting apparatus 1 is preferably made of one piece of stainless steel. It is of the utmost importance, herein, in order to prevent cracking or breaking of the glass, that the steel, which is far tougher than the glass, does not come into contact with the glued glass panel. A steel connecting apparatus 1 according to the figures 2A and 2B is suitable for applications in which the glue connection is not loaded with a great bending moment, such as for instance in glass roofs. When greater bending moments have to be absorbed, such as for instance in glass curtain walls, it is possible to use a connecting apparatus 1 according to the figures 2A and 2B, made of aluminium, which is more flexible than stainless steel.

An embodiment of the connecting apparatus 1 which can be executed in stainless steel and which combines the advantages of those of figures 2A and 2B, respectively, is shown in figures 3A and 3B. Herein, the trumpet base edge 7 is further thinned down till below the level of a bent trumpet end edge portion 9, which at its lower side forms the groove 4, and of which the end edge 5 is retracted relative to the glue surface 2.

In very critical applications in which the glue connection is loaded with extremely great bending moments, a connecting apparatus 1 according to the figures 3A and 3B, can be used, which is made of a more flexible material than stainless steel, such as for instance aluminium or a suitable synthetic material. The manufacture of this embodiment of the connecting apparatus 1 is also easier in these materials than in stainless steel, and can for instance take place by injection moulding a synthetic material.

## Claims

1. Apparatus (1) for constructionally connecting a glass panel to a supporting structure, said apparatus (1) comprising a base (6) and a connecting means (3), said apparatus (1) having a glue surface (2) for gluing together with the glass panel, the glue surface (2) being rotationally symmetrical with a circular contour, said connecting means (3) for attaching the apparatus (1) to the supporting structure merging towards the glue surface (2) into the base (6), **characterized in that,** said base (6) having integrally therewith at its bottom a glue surface (2) for gluing together with the glass panel, said glue surface (2) being integrally provided with a groove (4) running along its periphery, the contour edge (5) of the groove (4) situated on the outside of the groove (4) being retracted with respect to the glue surface (2), so that during gluing it remains at a greater distance from the glass panel than the glue surface (2), said base (6) flaring outwards in the shape of a trumpet from the connecting means (3) to the glue surface (2).

2. Connecting apparatus according to claim 1, **characterized in that** the connecting means (3) comprises a bore hole (8) with an internal screw thread.

3. Connecting apparatus according to claim 1 or 2, **characterized in that** it is made from one piece of stainless steel or aluminium.

4. Connecting apparatus according to claim 1, 2 or 3, **characterized in that** the glue surface (2) is textured.

5. Method for attaching a connecting apparatus to a glass panel, said apparatus for constructionally connecting the glass panel to a supporting structure, said apparatus being provided with a glue surface (2) for gluing together with the glass panel, and provided with a connecting means (3) for attaching the apparatus (1) to the supporting structure, the glue surface (2) being rotationally symmetrical with a circular contour, said glue surface (2) being provided with a groove (4) running along its periphery, wherein the connecting apparatus (1) is glued together with the glass panel, wherein an amount of glue is applied on the glue surface (2) of the connecting apparatus (1) and/or on the attachment surface of the glass panel, and wherein subsequently the connecting apparatus (1) is applied with its base (6) to the attachment surface of the glass panel, **characterized in that** the connecting apparatus (1) is rotatingly applied with its base (6) to the attachment surface of the glass panel.

6. Method according to claim 5, **characterized in that** the distribution of the glue during gluing is observed by means of a mirror placed behind the glass panel, the attachment surface of the glass panel preferably being roughened prior to the gluing.

7. Method according to claim 5 or 6, **characterized in that** a UV-resistant glue is used, the glue preferably being dosaged such that the thickness of the glue layer after gluing is less than 1 mm.

8. Glass panel, provided with at least one connecting apparatus (1), which connecting apparatus is glued together with the glass panel said connecting apparatus (1) for constructionally connecting said glass panel to a supporting structure and being provided with a surface (2) for gluing together with said glass panel and a connecting means (3) for attaching the apparatus (1) to the supporting structure, the glue surface (2) being rotatingly symmetrical with a circular contour, **characterized in that** the glue surface (2) is provided with a groove (4) running along its periphery and in that the glue is a UV-resistant glue, the thickness of the glue layer being less than 1 mm.

## Patentansprüche

1. Vorrichtung (1) zum konstruktiv Verbinden einer Glasscheibe mit einer Tragkonstruktion, wobei die Vorrichtung (1) mit einer Basis (6) und einem Verbindungsmittel (3) versehen ist, wobei die Vorrichtung (1) eine Kleboberfläche (2) zur Verklebung mit der Glasscheibe umfaßt, wobei die Kleboberfläche (2) rotationssymmetrisch ist mit einer kreisförmigen Begrenzung, wobei das Verbindungsmittel (3), um die Vorrichtung (1) an der Tragkonstruktion zu befestigen, zu der Kleboberfläche (2) in der Basis (6) aufgeht, **dadurch gekennzeichnet,** daß die Basis (6) integrierend damit an seinem Boden eine Kleboberfläche (2) zur Verklebung mit der Glasscheibe umfaßt, wobei die Kleboberfläche (2) integrierend mit einer entlang ihrem Umriß laufenden Rille (4) versehen ist, wobei der außen der Rille (4) gelegene Begrenzungsrand (5) der Rille (4) hinsichtlich der Kleboberfläche (2) zurückgelegen ist, so daß dieser bei der Verklebung in größerer Entfernung von der Glasscheibe bleibt als die Kleboberfläche (2), wobei die Basis (6) sich von dem Verbindungsmittel (3) zu der Kleboberfläche (2) in einer Trompeteform ausstellt.

2. Verbindungsvorrichtung gemäß Anspruch 1, **dadurch gekennzeichnet,** daß das Verbindungsmittel (3) ein Bohrungsloch (8) mit einem inneren Gewinde umfaßt.

3. Verbindungsvorrichtung gemäß Anspruch 1 oder 2, **dadurch gekenn**zeichnet, daß es aus einem Stück rostfrei Stahl oder Aluminium hergestellt ist.

4. Verbindungsvorrichtung gemäß Anspruch 1, 2 oder 3, **dadurch gekennzeichnet**, daß die Kleboberfläche (2) strukturiert ist.

5. Verfahren zum Befestigen einer Verbindungsvorrichtung mit einer Glasscheibe, wobei die Vorrichtung zum konstruktiv Verbinden von der Glasscheibe mit einer Tragkonstruktion dient, wobei die Vorrichtung mit einer Kleboberfläche (2) zur Verklebung mit der Glasscheibe versehen ist, und mit einem Verbindungsmittel (3) um die Vorrichtung (1) mit der Tragkonstruktion zu befestigen versehen ist, wobei die Kleboberfläche (2) rotationssymmetrisch ist mit einer kreisförmigen Begrenzung, wobei die Kleboberfläche (2) mit einer entlang ihrem Umriß laufenden Rille (4) versehen ist, wobei die Verbindungsvorrichtung (1) mit der Glasscheibe verklebt ist, wobei eine Menge Kleber auf der Kleboberfläche (2) der Verbindungsvorrichtung (1) und/oder auf der Befestigungsoberfläche der Glasscheibe angebracht ist, und wobei darauf die Verbindungsvorrichtung (1) mit ihrer Basis (6) auf der Befestigungsoberfläche der Glasscheibe angeordnet ist, **dadurch gekennzeichnet**, daß die Verbindungsvorrichtung (1) rotierend mit ihrer Basis (6) auf der Befestigungsoberfläche der Glasscheibe angeordnet ist.

6. Verfahren gemäß Anspruch 5, **dadurch gekennzeichnet**, daß die Verteilung von dem Kleber während dem Kleben durch einen hinter der Glasscheibe angeordneten Spiegel beobachtet wird, wobei die Befestigungsoberfläche der Glasscheibe vorzugsweise vorabgehend an dem Kleben aufgerauht wird.

7. Verfahren gemäß Anspruch 5 oder 6, **dadurch gekennzeichnet,** daß ein UV-beständiger Kleber benutzt wird, wobei der Kleber vorzugsweise derartig dosiert wird, daß die Dicke der Klebschicht nach Verklebung kleiner als 1 mm ist.

8. Glasscheibe, mit zumindest einer Verbindungsvorrichtung (1) versehen, welche Verbindungsvorrichtung mit der Glasscheibe verklebt ist, wobei die Verbindungsvorrichtung (1) zum konstruktiv Verbinden von der Glasscheibe mit einer Tragkonstruktion dient und mit einer Oberfläche (2) zur Verklebung mit einer Glasscheibe und einem Verbindungsmittel (3) um die Vorrichtung (1) mit der Tragkonstruktion zu befestigen versehen ist, wobei die Kleboberfläche (2) rotationssymmetrisch ist mit einer kreisförmigen Begrenzung, **dadurch gekennzeichnet**, daß die Kleboberfläche (2) mit einer entlang ihrem Umriß laufenden Rille (4) versehen ist, und daß der Kleber ein UV-beständiger Kleber ist, wobei die Dicke der Kleberschicht kleiner als 1 mm ist.

## Revendications

1. Appareil (1) pour fixer structurellement un panneau de verre à une structure de support, ledit appareil (1) comprenant une base (6) et un moyen de fixation (3), ledit appareil (1) ayant une surface de colle (2) pour pouvoir adhérer au panneau de verre, la surface de colle (2) ayant une symétrie de rotation avec un contour circulaire, ledit moyen de fixation (3) permettant de fixer l'appareil (1) à la structure de support fusionnant dans la base (6) en direction vers la surface de colle (2), caractérisé en ce que ladite base (6) présente, d'une seule pièce avec elle, dans sa partie inférieure, une surface de colle (2) pour pouvoir adhérer au panneau de verre, ladite surface de colle (2) étant pourvue, d'une seule pièce avec elle, d'une rainure (4) courant le long de sa périphérie, le bord profilé (5) de la rainure (4) situé sur la partie extérieure de la rainure (4) étant rétracté par rapport à la surface de colle (2), de telle sorte qu'au cours du collage, il reste à une distance plus grande du panneau de verre que la surface de colle (2), et ladite base (6) s'évasant vers l'extérieur sous la forme d'une trompette du moyen de fixation (3) à la surface de colle (2).

2. Appareil de fixation selon la revendication 1, caractérisé en ce que le moyen de fixation (3) comprend un alésage (8) avec un filet de vis interne.

3. Appareil de fixation selon la revendication 1 ou 2, caractérisé en ce qu'il est constitué d'une seule pièce d'acier inoxydable ou d'aluminium.

4. Appareil de fixation selon la revendication 1, 2 ou 3, caractérisé en ce que la surface de colle (2) est texturée.

5. Procédé pour assujettir un appareil de fixation à un panneau de verre, ledit appareil étant destiné à fixer structurellement le panneau de verre à une structure de support, ledit appareil étant pourvu d'une surface de colle (2) pour pouvoir adhérer au panneau de verre, et pourvu d'un moyen de fixation (3) pour assujettir l'appareil (1) à la structure de support, la surface de colle (2) ayant une symétrie de rotation avec un contour circulaire, ladite surface de colle (2) étant pourvue d'une rainure (4) courant le long de sa périphérie, dans lequel l'appareil de fixation (1) est collé au panneau de verre, dans lequel une certaine quantité de colle est appliquée sur la surface de colle (2) de l'appareil de fixation (1) et/ou sur la surface d'assujettissement du panneau de verre, et dans lequel, ensuite, l'appareil de fixation (1) est appliqué avec sa base (6) sur la surface d'assujettissement du panneau de verre, caractérisé en ce que l'appareil de fixation (1) est appliqué par rotation avec sa base (6) sur la surface d'assujettissement du panneau de verre.

6. Procédé selon la revendication 5, caractérisé en ce que la distribution de la colle au cours du collage est observée au moyen d'un miroir placé derrière le panneau de verre, la surface d'assujettissement du panneau de verre étant de préférence dépolie avant le collage.

7. Procédé selon la revendication 5 ou 6, caractérisé en ce qu'on utilise une colle résistant aux UV, la colle étant de préférence dosée de telle sorte que l'épaisseur de la couche de colle après collage soit inférieure à 1 mm.

8. Panneau de verre pourvu d'au moins un appareil de fixation (1), ledit appareil de fixation étant collé au panneau de verre, ledit appareil de fixation (1) étant destiné à fixer structurellement ledit panneau de verre à une structure de support et étant pourvu d'une surface (2) pour pouvoir adhérer audit panneau de verre et un moyen de fixation (3) afin d'assujettir l'appareil (1) à la structure de support, la surface de colle (2) ayant une symétrie de rotation avec un contour circulaire, caractérisé en ce que la surface de colle (2) est pourvue d'une rainure (4) courant le long de sa périphérie et en ce que la colle est une colle résistant aux UV, l'épaisseur de la couche de colle étant inférieure à 1 mm.
